# EUROPÄISCHE PATENTSCHRIFT

(11) **EP 0 866 069 B1**
(45) Veröffentlichungstag und Bekanntmachung des Hinweises auf die Patenterteilung: **04.12.2002**
(21) Anmeldenummer: 98104657.6
(22) Anmeldetag: 14.03.1998
(51) Int. Cl.: C07F 9/655

(54) **Herstellung von Ascorbylmonophosphaten**
Preparation of ascorbyl monophosphates
Préparation de monophosphates d'ascorbyle

(30) Priorität: 18.03.1997 EP 97104554
(43) Veröffentlichungstag der Anmeldung: 23.09.1998
(73) Patentinhaber: F. HOFFMANN-LA ROCHE AG, 4070 Basel (CH)
(72) Erfinder: Dlubala, Alain, 68170 Rixheim (FR); Nösberger, Paul, 4127 Birsfelden (CH)

(56) Entgegenhaltungen:
- EP-A- 0 508 233
- US-A- 5 110 950
- LIAO MING-LONG: "A stable form of vitamin C : L-ascorbate 2-triphosphate." JOURNAL OF AGRICULTURAL AND FOOD CHEMISTRY., Bd. 38, Nr. 2, 1990, AMERICAN CHEMICAL SOCIETY. WASHINGTON., US, Seiten 355-366, XP002126717

## Beschreibung

Die vorliegende Erfindung betrifft ein neues Verfahren zur Herstellung von Alkalimetall- und Erdalkalimetallsalzen von L-Ascorbinsäure-2-monophosphat, und zwar ausgehend von einem L-Ascorbinsäuresalz, einem L-Ascorbinsäure-2-polyphosphat sowie einem Erdalkalimetallhydroxid als Base.

Ascorbinsäure (Vitamin C) und deren Salze werden bekanntlich als Zusatzstoffe für menschliche und tierische Nahrungsmittel verwendet. Ascorbinsäure selber ist allerdings temperatur- und oxidationsempfindlich und wird beispielsweise bei der Herstellung und Lagerung von angereichertem Fischfutter zu einem erheblichen Teil zersetzt und geht dadurch verloren. Insbesondere die Ascorbinsäurephosphate stellen bekanntlich gegen oxidativen und thermischen Abbau geschützte Formen der Ascorbinsäure dar und werden deswegen und vor allem zur nährenden Anreicherung von Fischfutter eingesetzt. Bei Verwendung der gegenüber Ascorbinsäure wesentlich stabileren Ascorbinsäurephosphate wird das Problem der Zersetzung praktisch vollkommen beseitigt und die beispielsweise gegen Skorbut in Fischen und Krabben wirksame Ascorbinsäure im Organismus des Wirttiers durch Einwirkung des Enzyms Phosphatase freigesetzt.

Zur Phosphorylierung von Ascorbinsäure sind bisher zwei grundsätzlich verschiedene Verfahren von Bedeutung, und zwar die Phosphorylierung mit Phosphoroxychlorid (wie diese beispielsweise in den Europäischen Patentpublikationen 388.869 und 582.924 sowie in der US-Patentschrift 4.179.445 beschrieben ist), und die Phosphorylierung mit Polyphosphaten, z.B. Natriumtrimetaphosphat (siehe beispielsweise die US-Patentschriften 4.647.672 und 5.110.950), wobei in beiden Fällen ein L-Ascorbinsäuresalz unter basischen Bedingungen phosphoryliert wird. Das erstere Verfahren liefert als Hauptprodukt Ascorbinsäure-2-monophosphat, als Nebenprodukte hauptsächlich Ascorbinsäure-3-phosphat und -2-pyrophosphat sowie Bis(Ascorbinsäure)-2,2'-diphosphat [siehe C.H. Lee et al., Carbohydrate Res. 67, 127-138 (1971)]. Die Reaktionsprodukte müssen aufwendig gereinigt werden und können nicht auf einfache Weise, z.B. durch Sprühtrocknung des gesamten Reaktionsgemisches, in ein direkt verkäufliches Produkt umgesetzt werden. Aus diesen Gründen stellt die Phosphorylierung mit Phosphoroxychlorid wirtschaftlich und ökologisch ein wenig attraktives Verfahren dar. Das alternative Verfahren, d.h. die Phosphorylierung mit Polyphosphaten, liefert als Primärprodukt Ascorbinsäure-2-polyphosphate, beispielsweise Ascorbinsäure-2-triphosphat bei Verwendung von Natriumtrimetaphosphat. Die Ascorbinsäure-2-polyphosphate können durch einen Ueberschuss an Base bis zum Monophosphat abgebaut werden. Das Verhältnis von Ascorbinsäure-2-monophosphat zu Ascorbinsäure-2-diphosphat und höheren Phosphaten wird durch die Menge an verwendeter Base und die sonstigen Reaktionsbedingungen beeinflusst. Ein Nachteil dieses Verfahrens besteht darin, dass sehr viel Phosphorylierungsmittel, z.B. mindestens 1 Mol Natriumtrimetaphosphat pro Mol Ascorbinsäure, benötigt wird. Wenn das Produkt verhältnismässig wenig Ascorbinsäurepolyphosphate und mehr Ascorbinsäure-2-monophosphat enthalten soll, muss zudem viel Base, z.B. Calciumhydroxid, verwendet werden. Demzufolge enthält das Produkt viel anorganische Phosphate; der Gehalt an Ascorbinsäure-Aequivalenten in einem getrockneten Produkt beträgt höchstens etwa 25 Gewichtsprozent. Der Ablauf des in der US-Patentschrift 5.110.950 beschriebenen Verfahrens, sofern es zur Herstellung des Monophosphats eingesetzt wird, ist aus dem nachfolgenden einschlägigen Reaktionsschema 1 ersichtlich, in welchem - zwecks einer übersichtlichen und vereinfachten Darstellung - von Natriumascorbat, dem bevorzugten Phosphorylierungsmittel Natriumtrimetaphosphat und der Base Calciumhydroxid ausgegangen wird:

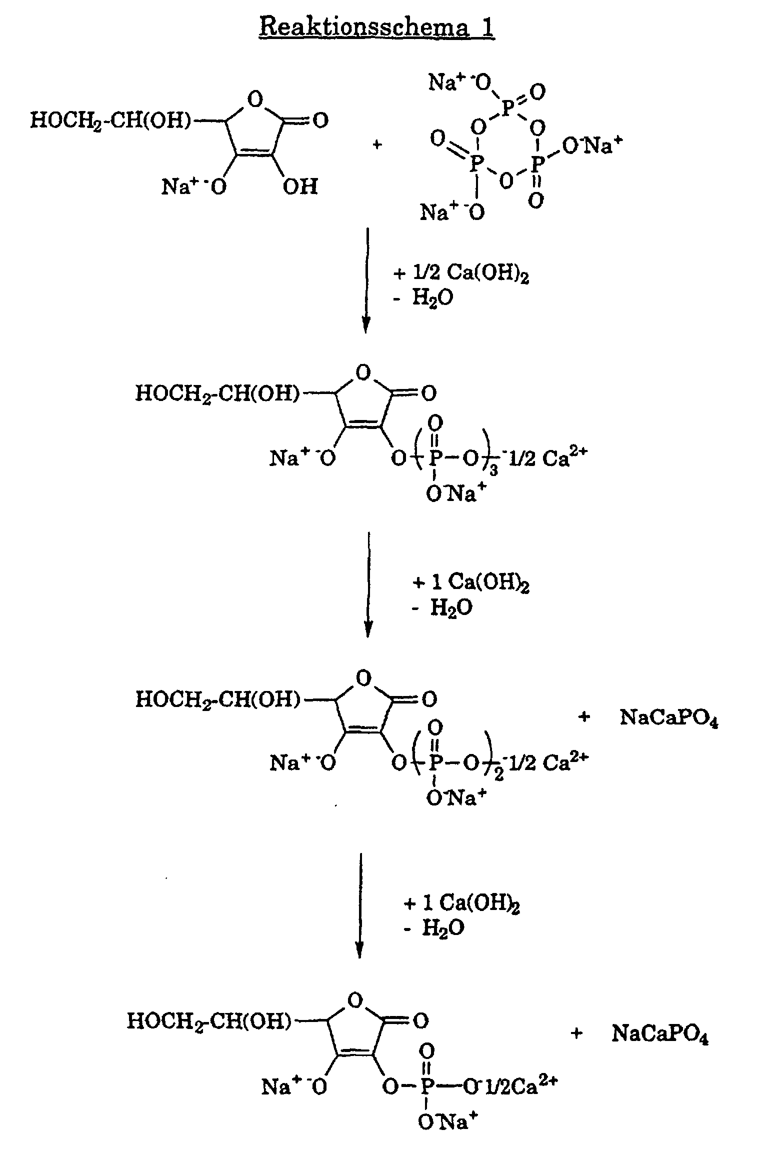

In diesem Verfahren wird Natriumascorbat mit Natriumtrimetaphosphat in einem Molverhältnis von 1:1 unter Einwirkung von insgesamt 2,5 Mol Calciumhydroxid umgesetzt, um nach drei Schritten 1 Mol Ascorbinsäure-2-monophosphat zu erzeugen. Dabei werden zwei Mol Natriumcalciumphosphat freigesetzt, dessen Vorhandensein im Gesamtprodukt als Nachteil anzusehen ist.

Es wurde nun gefunden, dass mit Polyphosphat-Phosphorylierungsmitteln, z.B. Natriumtrimetaphosphat, auch hauptsächlich Alkalimetallund Erdalkalimetallsalze von L-Ascorbinsäure-2-monophosphat hergestellt werden können, wenn man das primär gebildete L-Ascorbinsäure-2-polyphosphat unter bestimmten alkalischen Bedingungen mit einer konzentrierten Lösung eines Alkalimetall- oder Erdalkalimetallsalzes der L-Ascorbinsäure umsetzt, wobei im Verlaufe der Reaktion eine schrittweise Uebertragung von jeweils einer Phosphatgruppe 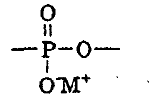 des Polyphosphats auf das L-Ascorbinsäuresalz erfolgt, bis im wesentlichen das Polyphosphat aufgebraucht worden ist und nur noch L-Ascorbinsäure-2-monophosphatsalz vorhanden ist. Dadurch können die benötigten Mengen an Phosphorylierungsmittel und Base drastisch reduziert und die Hauptnachteile der bekannten Verfahren eliminiert werden.

Das erfindungsgemässe Verfahren zur Herstellung von Alkalimetallund Erdalkalimetallsalzen von L-Ascorbinsäure-2-monophosphat, der allgemeinen Formel 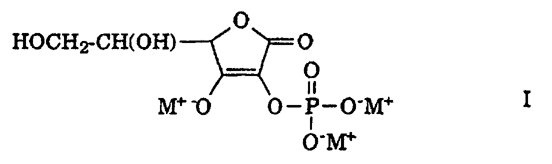 worin M⁺ jeweils ein Alkalimetallion oder das Aequivalent eines Erdalkalimetallions bedeutet,
ist dadurch gekennzeichnet, dass man ein L-Ascorbinsäure-2-polyphosphat der allgemeinen Formel 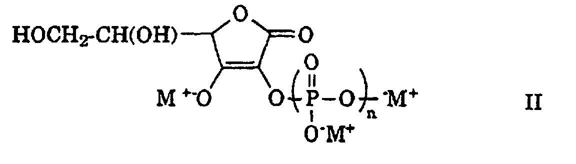 worin M⁺ die oben angegebene Bedeutung besitzt und n eine ganze Zahl ab 2 bedeutet,
unter alkalischen Bedingungen mit einem Alkalimetall- oder Erdalkalimetallsalz von L-Ascorbinsäure, der allgemeinen Formel 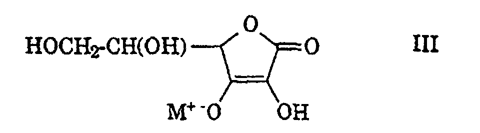 worin M⁺ die oben angegebene Bedeutung besitzt,
in konzentrierter wässriger Lösung umsetzt, wobei die Mengen des L-Ascorbinsäuresalzes der Formel III und des als Base verwendeten Erdalkalimetallhydroxids so bestimmt werden, dass der pH-Wert des Reaktionsmediums im Bereich von etwa 8 bis etwa 11 gehalten wird und eine schrittweise Uebertragung jeweils einer Phosphatgruppe 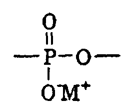 vom Polyphosphat der Formel II auf das L-Ascorbinsäuresalz der Formel III erfolgt, bis im wesentlichen das Polyphosphat aufgebraucht worden ist und nur noch L-Ascorbinsäure-2-monophosphatsalz der Formel I vorhanden ist.

Im Rahmen der obigen Definition ist unter dem Ausdruck "Alkalimetallion" insbesondere ein Natrium- oder Kaliumion zu verstehen, vorzugsweise ein Natriumion. Bei dem Erdalkalimetallion handelt es sich insbesondere um ein Calciumion oder ein Magnesiumion, wobei das Ersterwähnte bevorzugt ist. In diesem Fall wird in Anbetracht seiner Zweiwertigkeit das Erdalkalimetallion jeweils als halbes Ion dargestellt, so dass beispielsweise ein Calciumion M⁺ in der Formel I, II oder III in diesem Sinne als 1/2 Ca²⁺ dargestellt wird. Obwohl die Ionen M⁺ in den Formeln I, II und III gleich oder verschieden sein können, hängen die einzelnen Bedeutungen von der Natur des zur Herstellung des Polyphosphats der Formel II verwendeten L-Ascorbinsäuresalzes der Formel III und des Phosphorylierungsmittels sowie von der Natur der eingesetzten alkalischen Base ab, wobei unter anderem auch Ionenaustausch eine Rolle spielt. Geeigneterweise wird die gleiche Base für die Herstellung des Polyphosphats eingesetzt als die im erfindungsgemässen Verfahren verwendete Base. Anhand eines Beispiels kann dies erläutert werden: Im Falle der Verwendung des Natriumsalzes der L-Ascorbinsäure (der Formel III, in der M⁺ Na⁺ bedeutet), des Phosphorylierungsmittels Natriumtrimetaphosphat, der Formel 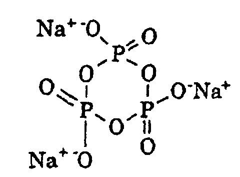 , und von Calciumhydroxid [Ca(OH)₂] als Base (alle bevorzugte Reaktionsteilnehmer) können die Formeln I, II und III unter anderem und vereinfacht wie folgt dargestellt werden: 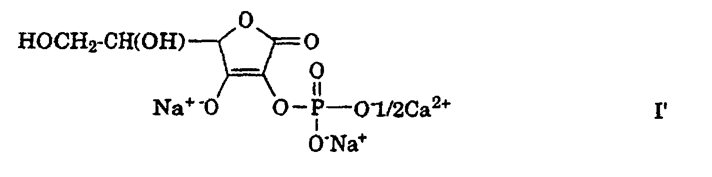 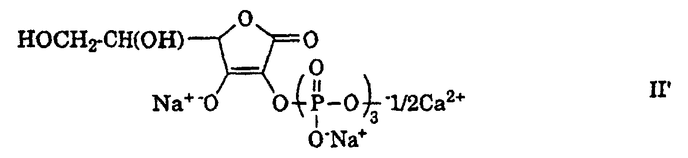 bzw. 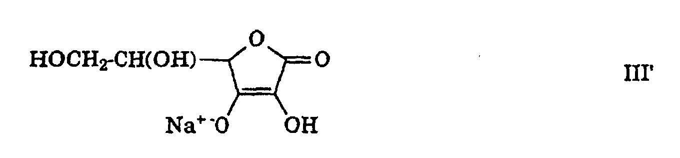 Daraus ist ersichtlich, dass n von der Natur des Phosphorylierungsmittels abhängt: beispielsweise bedeutet n 3, wenn als Phosphorylierungsmittel Natriumtrimetaphosphat verwendet wird, bzw. 6, wenn dazu Natriumhexametaphosphat verwendet wird. Darüber hinaus soll berücksichtigt werden, dass das Produkt der Formel I bzw. I' unvermeidlich als Gemisch verschiedener Alkalimetall- und Erdalkalimetallsalze von L-Ascorbinsäure-2-monophosphat anfällt und nie durch eine einzige Formel I dargestellt werden kann.

Aus dem nachfolgenden einschlägigen Reaktionsschema 2, in welchem zwecks einer übersichtlichen und vereinfachten Darstellung von dem L-Ascorbinsäure-Natriumsalz der Formel III' und dem Phosphorylierungsmittel Natriumtrimetaphosphat (zur Herstellung des L-Ascorbinsäure-2-polyphosphats der Formel II') sowie der Base Calciumhydroxid ausgegangen wird, ist der Ablauf des erfindungsgemässen Verfahrens ersichtlich; es wird dabei ein L-Ascorbinsäure-2-monophosphat hergestellt, das u.a. Moleküle der Formel I' aufweist:

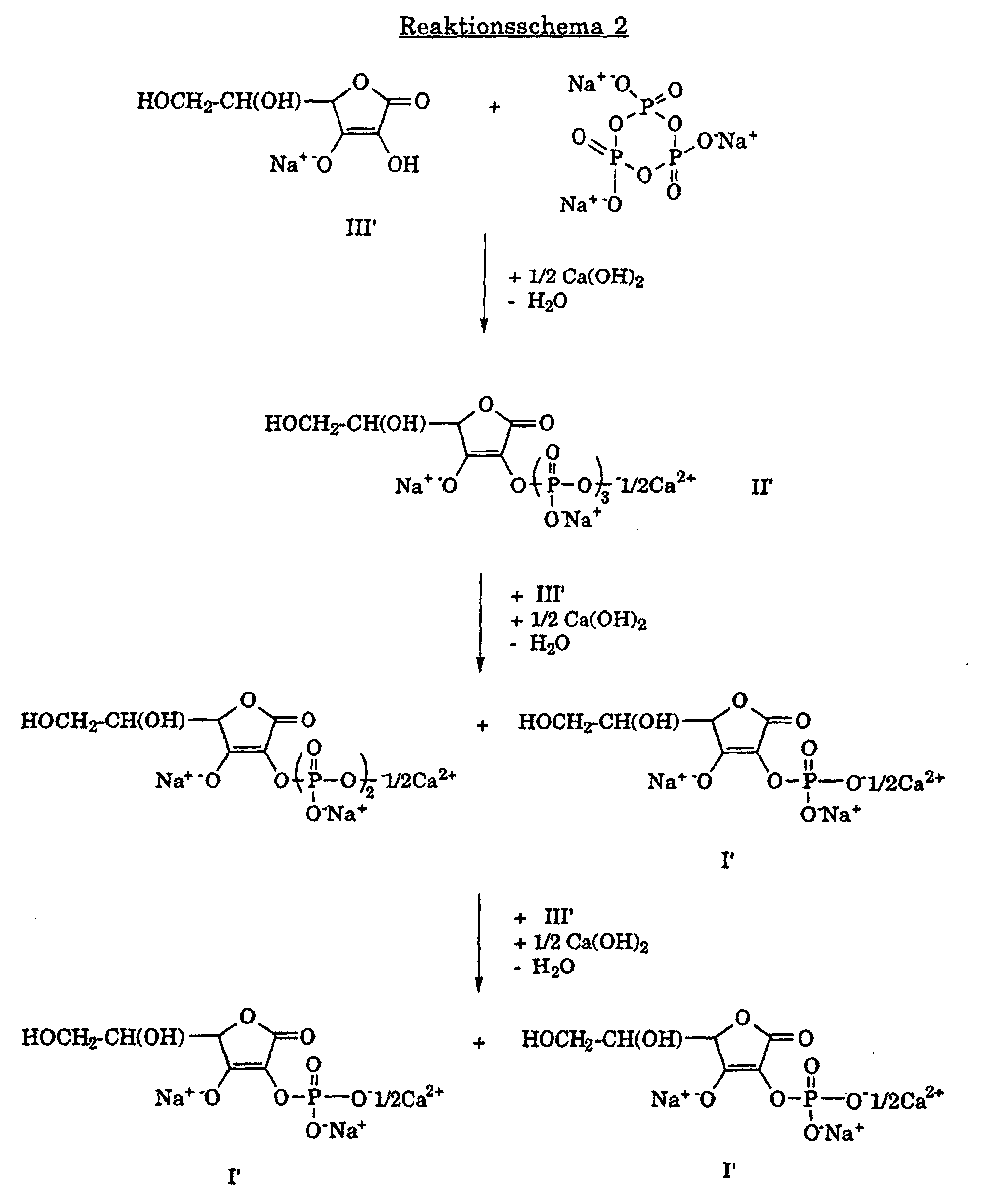

Die Herstellung des L-Ascorbinsäure-2-polyphosphats der Formel II kann im voraus (separat) oder in situ erfolgen, vorzugsweise in situ. Ausgehend von einem separat oder in situ hergestellten L-Ascorbinsäure-2-polyphosphat der Formel II beträgt das Molverhältnis L-Ascorbinsäuresalz der Formel III zu L-Ascorbinsäure-2-polyphosphat der Formel II zweckmässigerweise etwa n-1:1, wobei die Abweichung von diesem Verhältnis vorzugsweise nicht mehr als etwa 30% beträgt.

Falls die separate Herstellung des L-Ascorbinsäure-2-polyphosphats der Formel II erwünscht wird, so kann diese Herstellung auf an sich bekannte Weise erfolgen, zweckmässigerweise nach der in der US-Patentschrift 5.110.950 beschriebenen Methode. Das Reaktionsprodukt kann isoliert (eingedampft) oder aber unmittelbar als wässrige Lösung für die weitere Umsetzung (mit dem L-Ascorbinsäuresalz der Formel III) verwendet werden. Als Phosphorylierungsmittel für die separate (und ebenfalls für die in situ-)Herstellung des L-Ascorbinsäure-2-polyphosphats ist Natriumtrimetaphosphat bevorzugt, wobei das Polyphosphat drei Phosphatgruppen 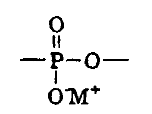 im Molekül (n = 3) aufweist. Höhere Metaphosphate, z.B. das bereits oben erwähnte Natriumhexametaphosphat, oder Polyphosphorsäure sind prinzipiell auch anwendbar.

Was die in situ-Herstellung des L-Ascorbinsäure-2-polyphosphats anbelangt, so wird das Phosphorylierungsmittel zweckmässigerweise der konzentrierten Lösung des L-Ascorbinsäuresalzes zugegeben. Das Phosphorylierungsmittel, z.B. Natriumtrimetaphosphat, kann beispielsweise als wässrige Lösung oder als Feststoff zugegeben werden, wobei die letztere Zugabemethode bevorzugt ist. Zweckmässigerweise erfolgt ebenfalls die Zugabe der Base, z.B. Calciumhydroxid, entweder separat oder in einem Gemisch mit dem Phosphorylierungsmittel. Die gleichzeitige Zugabe des Phosphorylierungsmittels und der Base, insbesondere durch Zugabe eines Gemisches der beiden, ist bevorzugt.

Bei der Herstellung des L-Ascorbinsäure-2-monophosphats selber ist die Art und Weise der Zugabe der einzelnen Reaktanden von besonderer Bedeutung. Das L-Ascorbinsäuresalz der Formel III muss immer gegenüber dem L-Ascorbinsäure-2-polyphosphat der Formel II im Ueberschuss im Reaktionsmedium vorhanden sein. Dies wird beispielsweise dadurch erreicht, dass man zuerst eine möglichst konzentrierte (annähernd gesättigte) wässrige Lösung des L-Ascorbinsäuresalzes vorbereitet, und zwar zweckmässigerweise durch Behandlung einer konzentrierten wässrigen Lösung von Ascorbinsäure mit Alkalilauge, z.B. Natronlauge. Dann wird verteilt auf die ganze Reaktionsdauer der konzentrierten wässrigen Lösung des L-Ascorbinsäuresalzes das (separat hergestellte) L-Ascorbinsäure-2-polyphosphat bzw. das Phosphorylierungsmittel (zur in situ-Herstellung dieses Polyphosphats), z.B. Natriumtrimetaphosphat, sowie Base, z.B. Calciumhydroxid, zugegeben, so dass das (gegebenenfalls in situ-hergestellte) L-Ascorbinsäure-2-polyphosphat und das L-Ascorbinsäuresalz unter den herrschenden alkalischen Bedingungen gleich miteinander reagieren. Dabei muss der pH-Wert durch die Zugabe der Base innerhalb des Bereiches von etwa 8 bis etwa 11 gehalten werden. Da das Reaktionsmedium möglichst konzentriert sein soll, werden im Falle der in situ-Herstellung des L-Ascorbinsäure-2-polyphosphats das Phosphorylierungsmittel und die Base vorteilhaft als Feststoffe zugegeben. Der pH-Wert kann durch entsprechende Dosierung der Base kontinuierlich eingestellt werden, auch wenn sich diese im Gemisch mit dem Phosphorylierungsmittel befindet, und zwar durch gelegentliche Festlegung des Verhältnisses Phosphorylierungsmittel zu Base. Zudem soll die Geschwindigkeit der Zugabe von Phosphorylierungsmittel und Base so eingestellt werden, dass kein L-Ascorbinsäure-2-polyphosphat ausfällt; die Reaktion wird demgemäss so geführt, dass das Polyphosphat möglichst rasch mit dem L-Ascorbinsäuresalz über das (jeweils) weniger polyphosphorylierte L-Ascorbinsäuresalz, z.B. das L-Ascorbinsäure-2-diphosphat, zum L-Ascorbinsäure-2-monophosphat weiter reagiert. In der Praxis wird zu diesem Zweck das Phosphorylierungsmittel am Anfang eher rasch, gegen Ende der Reaktion eher langsam, zugegeben. Zudem empfiehlt sich, eine gute Durchmischung der Reaktanden zu gewährleisten, damit die zugegebenen, festen Ausgangsmaterialien rasch in einen intensiven Kontakt mit dem flüssigen Reaktionsmedium gebracht werden.

Bei dem im erfindungsgemässen Verfahren verwendeten L-Ascorbinsäuresalz handelt es sich vorzugsweise um ein Alkalimetallsalz, insbesondere um das Natriumsalz (III = III'), da solche Salze besonders wasserlöslich sind. Alkalimetallsalze der Ascorbinsäure können beispielsweise im voraus durch Laktonisierung von Estern der 2-Keto-L-gulonsäure, z.B. 2-Keto-L-gulonsäure-methylester, mit Natriumbicarbonat, Natriumcarbonat oder Natriumhydroxid (Natronlauge) erhalten werden. In jedem Fall wird eine wässrige Lösung des Salzes hergestellt, vorzugsweise eine bei der Reaktionstemperatur nahezu gesättigte Lösung.

Zur Einstellung des pH-Wertes innerhalb des Bereiches von etwa 8 bis etwa 11 wird im Falle der in situ-Herstellung des L-Ascorbinsäure-2-polyphosphats zweckmässigerweise etwa 0,5 bis etwa 0,8 Mol, vorzugsweise etwa 0,55 bis etwa 0,65 Mol, Erdalkalimetallhydroxid pro Mol L-Ascorbinsäuresalz zugegeben. Von den Erdalkalimetallhydroxiden ist Calciumhydroxid bevorzugt. Da die Erdalkalimetallhydroxide nicht besonders wasserlöslich sind, kann das Erdalkalimetallhydroxid als Suspension in Wasser zugegeben werden. Bevorzugt wird allerdings das Erdalkalimetallhydroxid als Feststoff, insbesondere - wie oben erwähnt - im Gemisch mit dem Phosphorylierungsmittel (in situ-Herstellung des L-Ascorbinsäure-2-polyphosphats), zugegeben.

Die Menge an verwendetem Phosphorylierungsmittel wird so gewählt, dass schliesslich der Gehalt an L-Ascorbinsäure-2-monophosphat im Endprodukt möglichst hoch ist, d.h. dass möglichst viel L-Ascorbinsäuresalz aufgebraucht wird. Bei Verwendung von Natriumtrimetaphosphat wird dies zufriedenstellend erreicht, wenn pro Mol L-Ascorbinsäuresalz etwa 0,3 bis etwa 0,5 Mol, vorzugsweise etwa 0,35 bis etwa 0,45 Mol, Phosphorylierungsmittel, verwendet wird.

Das erfindungsgemässe Verfahren erfolgt zweckmässigerweise bei Temperaturen im Bereich von etwa 20°C bis etwa 80°C, vorzugsweise bei Temperaturen im Bereich von etwa 40°C bis etwa 60°C. Im allgemeinen wird im Verlauf des Verfahrens die Temperatur allmählich erhöht, beispielsweise anfänglich von etwa 40°C bis etwa 60-70°C gegen Ende der Reaktion. Nach beendigter Reaktion wird die Temperatur vorteilhafterweise gesenkt, um die Reaktion abzustoppen.

Während der Reaktion beträgt der pH-Wert vorzugsweise etwa 9 bis etwa 10. Bei zu tiefem pH-Wert ist die Reaktion zu langsam. Ein zu hoher pH-Wert ist ebenfalls nachteilig. Der pH-Wert soll nicht wesentlich höher als 10, auf jeden Fall nicht höher als etwa 11, sein, da das L-Ascorbinsäuresalz unter stark alkalischen Bedingungen nur wenig stabil ist und da vermehrt anorganische Phosphate gebildet werden. Bei zu hohem pH-Wert werden L-Ascorbinsäure-2-polyphosphat und weniger phosphoryliertes L-Ascorbinsäuresalz, z.B. L-Ascorbinsäure-2-diphosphat, durch Abspaltung von Phosphatgruppen mit der Base und nicht durch Reaktion mit L-Ascorbinsäuresalz zu L-Ascorbinsäure-2-monophosphat umgesetzt; dadurch erhöht sich der Anteil an anorganischen Salzen im Endprodukt, was klarerweise einen Nachteil darstellt.

Die zum Erreichen einer zufriedenstellenden Ausbeute an L-Ascorbinsäure-2-monophosphat der Formel I notwendige Reaktionszeit hängt von verschiedenen Faktoren ab, insbesondere von der Reaktionstemperatur, vom pH-Wert, von der Menge Wasser im Reaktionsmedium sowie von der Rührintensität. Im allgemeinen gilt, dass das L-Ascorbinsäure-2-polyphosphat eher langsam zugegeben bzw. in situ hergestellt wird als rasch. Wenn der pH-Wert und die Temperatur nicht unnötig hoch sind und keine übermässige Menge Sauerstoff vorhanden ist, ist eine eher lange Reaktionszeit nicht nachteilig. Typisch sind Reaktionszeiten von etwa 1 bis etwa 4 Stunden, vorzugsweise von etwa 1 1/2 bis etwa 2 1/2 Stunden.

Nach beendigter Reaktion kann das erhaltene Gemisch abgekühlt, z.B. auf etwa 30-40°C, und mit Wasser bis zu einer für eine Sprühtrocknung geeigneten Viskosität, z.B. etwa 100 mPa, verdünnt und schliesslich sprühgetrocknet werden. Falls sprühgetrocknet wird, fallen praktisch keine Abfallprodukte an, welche nachträglich zwangsläufig zu entsorgen wären. Vorteilig bei dem erfindungsgemässen Verfahren sind die weitgehende Vermeidung von Abfallprodukten und der hohe Gehalt (hohe Ausbeute) an gewünschtem L-Ascorbinsäure-2-monophosphat der Formel I. Dadurch werden die Rohstoffkosten und die Energiekosten bei der Sprühtrocknung auf ein Minimum reduziert.

Das erfindungsgemässe Verfahren wird anhand der nachfolgenden Beispiele veranschaulicht, in denen - mit Ausnahme des Beispiels 2 - der Gehalt an L-Ascorbinsäure-2-monophosphat und -2-polyphosphaten jeweils in L-Ascorbinsäure-Aequivalenten angegeben ist:

### Beispiel 1

### Umsetzung von L-Ascorbinsäure-2-triphosphat (Hauptanteil des verwendeten, so bezeichneten Gemisches) mit Natriumascorbat

In einem 750 ml-Reaktionsgefäss mit Doppelmantel werden unter Rühren und unter einer Stickstoffatmosphäre bei 60°C 67,3 g (340 mmol) Natriumascorbat zu 50 ml Wasser gegeben und dabei grösstenteils gelöst. Der pH-Wert wird mit 3,7 g Calciumhydroxid auf 9,5 eingestellt. Im Verlaufe von 2 Stunden werden portionenweise 87 g festes L-Ascorbinsäure-2-triphosphat (HPLC-Analyse: 4,3% Ascorbinsäure, 0,5% L-Ascorbinsäure als 2-Monophosphat, 1,4% L-Ascorbinsäure als 2-Diphosphat sowie 21,1% L-Ascorbinsäure als 2-Triphosphat) zugegeben, und zwar 58 g während der ersten und 29 g während der zweiten Stunde. Der pH-Wert wird durch Zugabe von 33,9 g Calciumhydroxid bei 9,5 gehalten. Es wird soviel Wasser (insgesamt 50 g) zugegeben, dass die Suspension immer gut rührbar ist. Nach beendigter Reaktion wird der Ansatz zur Trockene eingedampft (Wassergehalt: 10,5%). Die HPLC-Analyse des getrockneten Produkts ergibt 10,9% (verbleibende, nicht phosphorylierte) L-Ascorbinsäure, 34,5% L-Ascorbinsäure als 2-Monophosphat und 0,6% L-Ascorbinsäure als 2-Diphosphat. L-Ascorbinsäure-2-triphosphat ist nicht mehr nachweisbar.

### Beispiel 2

### a) Separate Herstellung einer L-Ascorbinsäure-2-polyphosphat-Lösung

In einem 500 ml-Reaktionsgefäss mit Doppelmantel werden 150 ml Wasser auf 0°C abgekühlt. Dann werden unter Rühren 114,44 g Natriumtrimetaphosphat zugegeben. Der pH-Wert wird mit Kalkmilch (einer 20%igen Suspension von Calciumhydroxid in Wasser) auf 11 eingestellt, was die Natriumtrimetaphosphat-Lösung ergibt.

67,32 g Natriumascorbat werden in 150 ml Wasser gelöst. Der pH-Wert wird mit Kalkmilch auf 11 eingestellt. Dann wird die Lösung auf 0°C abgekühlt, was die Natriumascorbat-Lösung ergibt.

Die Natriumascorbat-Lösung wird rasch zur Natriumtrimetaphosphat-Lösung gegeben. Die Temperatur wird im Verlaufe von 2 Stunden auf 30°C angehoben. Der pH-Wert wird mit Kalkmilch bei 11 gehalten. Nach 2 Stunden wird der Ansatz auf 0°C abgekühlt, was die L-Ascorbinsäure-2-polyphosphat-Lösung ergibt.

### b) Umsetzung von L-Ascorbinsäure-2-polyphosphat mit Natriumascorbat

In einem 500 ml-Reaktionsgefäss mit Doppelmantel werden unter Rühren und einer Stickstoffatmosphäre 134,64 g Natriumascorbat bei 60°C in 100 ml Wasser gelöst. Der pH-Wert wird mit Kalkmilch auf 10,5 eingestellt. Die Hälfte der L-Ascorbinsäure-2-polyphosphat-Lösung wird innerhalb einer Stunde, der Rest innerhalb von zwei Stunden zugegeben. Der pH-Wert wird mit Kalkmilch bei 10,5 gehalten. Während der letzten zwei Stunden wird unter vermindertem Druck Wasser abdestilliert. Nach beendigter Reaktion wird mit Schwefelsäure auf pH 7 neutralisiert und der Ansatz mit 300 ml Wasser verdünnt. Die Analyse mittels HPLC ergibt folgende Verteilung der L-Ascorbinsäure: 14,3% nicht phosphoryliert, 76,2% als Monophosphat, 7,6% als Diphosphat, <1% als Triphosphat und <2% als weitere L-Ascorbinsäure-2-polyphosphate.

### Beispiel 3

### In situ-Herstellung von L-Ascorbinsäure-2-polyphosphat und dessen Umsetzung mit Natriumascorbat

In einem 500 ml-Reaktionsgefäss mit Doppelmantel werden 100 g Wasser vorgelegt. Danach wird durch Ansetzen von Vakuum entgast. Das Vakuum wird mit Stickstoff gebrochen, und 176 g (1 mol) Ascorbinsäure werden zugegeben. Unter Rühren und vermindertem Druck wird die Ascorbinsäure mit 141,6 g 28%iger Natronlauge neutralisiert. Das Vakuum wird mit Stickstoff gebrochen und die Temperatur auf 50°C eingestellt. Unter Stickstoff wird innert 2 Stunden ein Gemisch aus 142,8 g (0,467 mol) Natriumtrimetaphosphat und 51,9 g (0,7 mol) Calciumhydroxid zugegeben. Am Anfang wird rasch, gegen Ende der Reaktion langsam zugegeben. Man rührt 60 Minuten nach, neutralisiert das Reaktionsgemisch mit 5,2 g 98%iger Schwefelsäure und verdünnt mit 300 g Wasser. Vom Reaktionsgemisch wird ein Aliquot (etwa 10 ml) entnommen und unter vermindertem Druck zur Trockene eingedampft. Die Analyse mittels HPLC ergibt 1,3% L-Ascorbinsäure, 34,3% L-Ascorbinsäure als 2-Monophosphat und 3,5% L-Ascorbinsäure als 2-Diphosphat, insgesamt 42,0% phosphorylierte Ascorbinsäure.

### Beispiele 4-7

Diese Beispiele wurden analog Beispiel 3 durchgeführt, allerdings unter veränderten Reaktionsbedingungen. Insbesondere wurde die Menge an Natriumtrimetaphosphat allmählich reduziert. Die erhaltenen Resultate sind in der nachfolgenden Tabelle zusammengefasst.

**Tabelle**

| Beispiel | 4 | 5 | 6 | 7 |
|---|---|---|---|---|
| Wasser (g) | 50 | 50 | 50 | 50 |
| ASC (g) | 176 | 176 | 176 | 176 |
| NaOH 28% (g) | 163,5 | 166 | 163,5 | 163,5 |
| STMP (g) | 132,6 | 112,2 | 102 | 91,8 |
| Ca(OH)₂(g) | 37 | 37 | 37 | 33,3 |
| H₂SO₄ (g) | 4 | 8,8 | 10,4 | 8,9 |
| Wasser (g) | 200 | 200 | 200 | 200 |
| Reaktionslösung (g) | 763,1 | 750 | 738,9 | 723,5 |
| Temperatur (°C) | 40-60 | 40 | 40-60 | 40-60 |
| pH-Wert der NaASC-Lösung | 9,9 | 10 | 10 | 10 |
| STMP/Ca(OH)₂-Zugabe in | 2 h | 4 h | 2 h | 2 h |
| Nachrühren | 0,25 h | 1 h | 0,25 h | 0,25 h |
| HPLC-Analyse (ASC-Aequivalente): | | | | |
| nicht phosphorylierte ASC (%) | 5 | 7,1 | 8,7 | 11,4 |
| ASC als Monophosphat (%) | 31,6 | 37,9 | 39,4 | 38,1 |
| ASC als Diphosphat (%) | 6,2 | 2,5 | 1,2 | 0,9 |
| ASC-Phosphate total (%) | 39,3 | 41,5 | 41,6 | 39,6 |
| ASC total (%) | 44,3 | 48,6 | 50,3 | 51 |
| ASC = L-Ascorbinsäure | | | | |
| STMP = Natriumtrimetaphosphat | | | | |
| NaASC = Natriumascorbat | | | | |

### Beispiel 8

### Wirbelschichttrocknung des Produktes

In einem 750 ml-Reaktionsgefäss mit Doppelmantel werden 165 g Wasser vorgelegt. Danach wird durch Ansetzen von Vakuum entgast. Das Vakuum wird mit Stickstoff gebrochen, und 176 g (1 mol) Ascorbinsäure werden zugegeben. Unter Rühren werden 88,4 g 50%ige Natronlauge zugegeben. Der pH-Wert beträgt dann 9,1. Die Temperatur auf 40°C eingestellt. Innert zwei Stunden wird unter Stickstoff gleichmässig ein Gemisch aus 132,6 g (0,433 mol) Natriumtrimetaphosphat und 44,45 g (0,6 mol) Calciumhydroxid zugegeben und die Temperatur im Reaktor auf 60°C erhöht. Es wird 30 Minuten nachgerührt, auf 40°C abgekühlt und mit 200 g Wasser verdünnt. Dann wird das Reaktionsgemisch unter vermindertem Druck eingedampft. Das resultierende feste Produkt wird vermahlen und im Wirbelschichttrockner mit 10 m³ heisser Luft bei 100°C während 30 Minuten getrocknet. Man erhält 364 g beige-braunes Pulver mit einer Restfeuchte von 6,3%. Die HPLC-Analyse ergibt 3% L-Ascorbinsäure, 33,2% L-Ascorbinsäure als 2-Monophosphat und 3,8% L-Ascorbinsäure als 2-Diphosphat, insgesamt 37,6% phosphorylierte Ascorbinsäure.

### Beispiel 9

### Sprühtrocknung des Produktes

In einem 500 ml-Reaktionsgefäss mit Doppelmantel werden 100 g Wasser vorgelegt. Danach wird durch Ansetzen von Vakuum entgast. Das Vakuum wird mit Stickstoff gebrochen, und 176 g (1 mol) Ascorbinsäure werden zugegeben. Unter Rühren und vermindertem Druck wird die Ascorbinsäure mit 142,8 g 28%iger Natronlauge neutralisiert. Der pH-Wert wird durch Zugabe von 18,6 g Calciumhydroxid auf 10 gestellt. Das Vakuum wird mit Stickstoff gebrochen und die Temperatur auf 40°C eingestellt. Unter Stickstoff wird innert 4 Stunden ein Gemisch aus 132,6 g (0,433 mol) Natriumtrimetaphosphat und 48,2 g (0,65 mol) Calciumhydroxid zugegeben. Man rührt 90 Minuten nach, neutralisiert das Reaktionsgemisch mit 7,1 g 98%iger Schwefelsäure und verdünnt mit 300 g Wasser. Das gesamte Reaktionsgemisch wird in einem Labor-Sprühturm sprühgetrocknet. Gemäss HPLC-Analyse enthält das Pulver 3,7% L-Ascorbinsäure, 38% L-Ascorbinsäure als 2-Monophosphat und 2,8% L-Ascorbinsäure als 2-Diphosphat, insgesamt 46,9% phosphorylierte Ascorbinsäure.

### Beispiel 10

### Verwendung von Natriumascorbat aus der Laktonisierung von 2-Keto-L-gulonsäure-methylester

208,4 g 2-Keto-L-gulonsäure-methylester werden in 500 g Methanol gelöst, und die Lösung wird unter Rühren zum Sieden erhitzt. Im Verlaufe von 2 Stunden werden 52 g Natriumcarbonat zugegeben. Der pH-Wert beträgt dann 8. Man rührt 30 Minuten nach, kühlt auf 40°C, filtriert das ausgefällte Natriumascorbat ab und wäscht es mit 100 g Methanol. Das feuchte Natriumascorbat wird im Trockenschrank bei 40°C unter vermindertem Druck getrocknet. Man erhält etwa 198,1 g rohes Natriumascorbat mit einem Gehalt an reinem Natriumascorbat von etwa 94%.

In einem 500 ml-Reaktionsgefäss mit Doppelmantel werden unter Stickstoff 198,1 g rohes Natriumascorbat in 230 g Wasser bei 40°C gelöst. Innert 2 Stunden wird die Temperatur auf 60°C erhöht und ein Gemisch aus 132,6 g (0,433 mol) Natriumtrimetaphosphat und 44,45 g (0,6 mol) Calciumhydroxid zugegeben. Man rührt 30 Minuten nach, kühlt auf 40°C ab und verdünnt mit 200 g Wasser. Das gesamte Reaktionsgemisch wird am Rotationsverdampfer unter vermindertem Druck bei einer Badtemperatur von 60°C möglichst rasch eingedampft, in einer Reibschale vermahlen und im Trockenschrank bei 60°C unter vermindertem Druck nachgetrocknet (Gewichtsausbeute: 375,8 g). Der Wassergehalt beträgt 6,7%. Gemäss HPLC-Analyse enthält das Pulver 3,7% L-Ascorbinsäure, 31,0% L-Ascorbinsäure als 2-Monophosphat, 3,6% L-Ascorbinsäure als 2-Diphosphat sowie 1,9% L-Ascorbinsäure als 2-Triphosphat.

### Beispiel 11

### Verwendung von Natriumascorbat aus der Laktonisierung von 2-Keto-L-gulonsäure-methylester ohne Isolierung des Natriumascorbats

208,4 g 2-Keto-L-gulonsäure-methylester werden in 500 g Methanol gelöst, und die Lösung'wird unter Rühren zum Sieden erhitzt. Im Verlaufe von 2 Stunden werden 52 g Natriumcarbonat zugegeben. Dabei steigt der pH-Wert nicht wesentlich über 8. Man rührt 30 Minuten nach, verdünnt mit 230 g Wasser und destilliert die Hauptmenge an Methanol über eine Vigreux-Kolonne ab. Der Destillationsrückstand (439 g) wird auf 40°C abgekühlt. Dann wird unter Stickstoff im Verlaufe von 2 Stunden die Temperatur von 40°C auf 60°C erhöht und ein Gemisch aus 132,6 g Natriumtrimetaphosphat und 44,45 g Calciumhydroxid zugegeben. Man rührt 30 Minuten nach. Das gesamte Reaktionsgemisch wird unter vermindertem Druck bei einer Badtemperatur von 60°C möglichst rasch eingedampft, in einer Reibschale vermahlen und im Trockenschrank bei 60°C unter vermindertem Druck nachgetrocknet (Gewichtsausbeute: 388 g). Der Wassergehalt beträgt 9%. Gemäss HPLC-Analyse enthält das Pulver 3,6% L-Ascorbinsäure, 30,2% L-Ascorbinsäure als 2-Monophosphat, 4,9% L-Ascorbinsäure als 2-Diphosphat sowie 0,9% L-Ascorbinsäure als 2-Triphosphat.

### Beispiel 12

### Verwendung von Kaliumhydroxid als Base

In einem 750 ml-Reaktionsgefäss mit Doppelmantel werden 175,6 g Wasser vorgelegt und durch Ansetzen von Vakuum entgast. Das Vakuum wird mit Stickstoff gebrochen, und 176 g (1 mol) Ascorbinsäure werden zugegeben. Unter Rühren und vermindertem Druck wird die Ascorbinsäure mit 113,2 g 55,9%iger Kalilauge neutralisiert. Das Vakuum wird mit Stickstoff gebrochen und die Temperatur auf 40°C eingestellt. Innert 2 Stunden wird unter einer Stickstoffatmosphäre die Temperatur von 40°C auf 60°C erhöht und ein Gemisch aus 132,6 g (0,433 mol) Natriumtrimetaphosphat und 48,2 g (0,65 mol) Calciumhydroxid zugegeben. Man rührt 15 Minuten nach und verdünnt mit 200 g Wasser. Das gesamte Reaktionsgemisch wird unter vermindertem Druck bei einer Badtemperatur von 60°C möglichst rasch eingedampft, in einer Reibschale vermahlen und im Trockenschrank bei 60°C unter vermindertem Druck nachgetrocknet (Gewichtsausbeute: 391,7 g). Der Wassergehalt beträgt 5%. Gemäss HPLC-Analyse enthält das Pulver 4,7% L-Ascorbinsäure, 32,5% L-Ascorbinsäure als 2-Monophosphat, 3,9% L-Ascorbinsäure als 2-Diphosphat sowie 1,1% L-Ascorbinsäure als 2-Triphosphat.

## Patentansprüche

1. Verfahren zur Herstellung von Alkalimetall- und Erdalkalimetallsalzen von L-Ascorbinsäure-2-monophosphat, der allgemeinen Formel 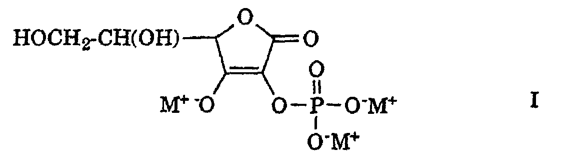 worin M⁺ jeweils ein Alkalimetallion oder das Aequivalent eines Erdalkalimetallions bedeutet,
**dadurch gekennzeichnet, dass** man ein L-Ascorbinsäure-2-polyphosphat der allgemeinen Formel 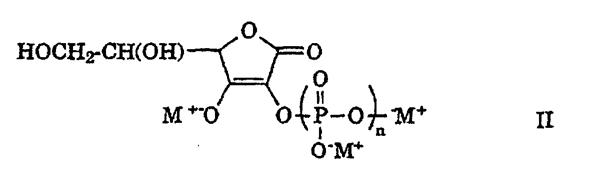 worin M⁺ die oben angegebene Bedeutung besitzt und n eine ganze Zahl ab 2 bedeutet,
unter alkalischen Bedingungen mit einem Alkalimetall- oder Erdalkalimetallsalz von L-Ascorbinsäure, der allgemeinen Formel 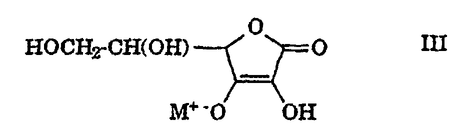 worin M⁺ die oben angegebene Bedeutung besitzt,
in konzentrierter wässriger Lösung umsetzt, wobei die Mengen des L-Ascorbinsäuresalzes der Formel III und des als Base verwendeten Erdalkalimetallhydroxids so bestimmt werden, dass der pH-Wert des Reaktionsmediums im Bereich von etwa 8 bis etwa 11 gehalten wird und eine schrittweise Uebertragung jeweils einer Phosphatgruppe 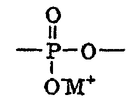 vom Polyphosphat der Formel II auf das L-Ascorbinsäuresalz der Formel III erfolgt, bis im wesentlichen das Polyphosphat aufgebraucht worden ist und nur noch L-Ascorbinsäure-2-monophosphatsalz der Formel I vorhanden ist.

2. Verfahren nach Anspruch 1, **dadurch gekennzeichnet, dass** das L-Ascorbinsäure-2-polyphosphat der Formel II in situ hergestellt wird.

3. Verfahren nach Anspruch 1 oder 2, **dadurch gekennzeichnet, dass** als L-Ascorbinsäure-2-polyphosphat eines der Formel 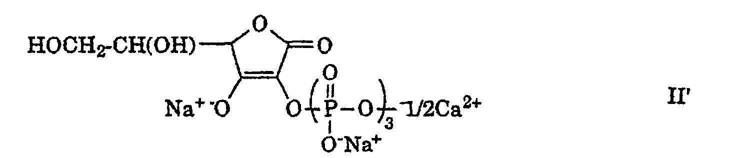 , als Alkalimetallsalz von L-Ascorbinsäure eines der Formel 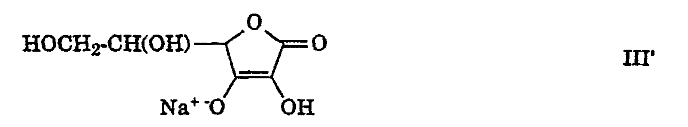 und als Base Calciumhydroxid verwendet werden.

4. Verfahren nach einem der Ansprüche 1 bis 3, **dadurch gekennzeichnet, dass** das L-Ascorbinsäure-2-polyphosphat der Formel II bzw. II' unter Verwendung von Natriumtrimetaphosphat als Phosphorylierungsmittel separat hergestellt wurde bzw. in situ hergestellt wird.

5. Verfahren nach einem der Ansprüche 1 bis 4, **dadurch gekennzeichnet, dass** das L-Ascorbinsäure-2-polyphosphat der Formel II in situ hergestellt wird und zu diesem Zweck ein Gemisch von Natriumtrimetaphosphat als Phosphorylierungsmittel mit der Base, vorzugsweise Calciumhydroxid, zugegeben wird.

6. Verfahren nach einem der Ansprüche 1 bis 5, **dadurch gekennzeichnet, dass** das L-Ascorbinsäure-2-polyphosphat der Formel II in situ hergestellt wird, und dass pro Mol L-Ascorbinsäuresalz der Formel III etwa 0,5 bis etwa 0,8 Mol, vorzugsweise etwa 0,55 bis etwa 0,65 Mol, Erdalkalimetallhydroxid eingesetzt wird.

7. Verfahren nach einem der Ansprüche 1 bis 6, **dadurch gekennzeichnet, dass** das L-Ascorbinsäure-2-polyphosphat der Formel II in situ hergestellt wird, und dass pro Mol L-Ascorbinsäuresalz der Formel III etwa 0,3 bis etwa 0,5 Mol, vorzugsweise etwa 0,35 bis etwa 0,45 Mol, Phosphorylierungsmittel Natriumtrimetaphosphat verwendet wird.

8. Verfahren nach einem der Ansprüche 1 bis 7, **dadurch gekennzeichnet, dass** die Reaktion bei Temperaturen im Bereich von etwa 20°C bis etwa 80°C, vorzugsweise im Bereich von etwa 40°C bis etwa 60°C, erfolgt.

9. Verfahren nach einem der Ansprüche 1 bis 8, **dadurch gekennzeichnet, dass** der pH-Wert etwa 9 bis etwa 10 beträgt.

10. Verfahren nach einem der Ansprüche 1 bis 9, **dadurch gekennzeichnet, dass** nach beendigter Reaktion, Abkühlen und Verdünnen bis zu einer für eine Sprühtrocknung geeigneten Viskosität das erhaltene Gemisch sprühgetrocknet wird.

## Claims

1. A process for the manufacture of alkali metal and alkaline earth metal salts of L-ascorbic acid 2-monophosphate of the general formula 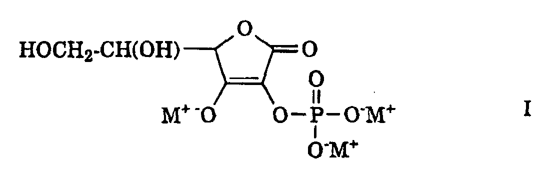 wherein each M⁺ signifies an alkali metal ion or the equivalent of an alkaline earth metal ion,
which process comprises reacting a L-ascorbic acid 2-polyphosphate of the general formula 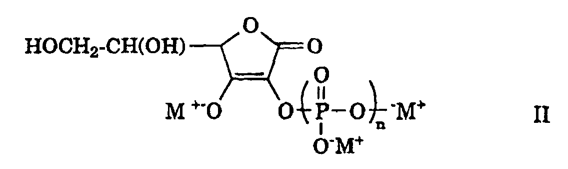 wherein M⁺ has the significance given above and n signifies a whole number from 2,
under alkaline conditions with an alkali metal or alkaline earth metal salt of L-ascorbic acid of the general formula 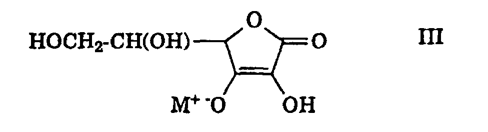 wherein M⁺ has the significance given above,
in concentrated aqueous solution, the amounts of the L-ascorbic acid salt of formula III and the alkaline earth metal hydroxide used as the base being arranged such that the pH value of the reaction medium is held in the range of about 8 to about 11 and a stepwise transfer of in each case one phosphate group 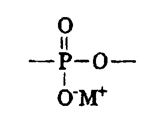 from the polyphosphate of formula II to the L-ascorbic acid salt of formula III taking place until essentially the polyphosphate has been consumed and only L-ascorbic acid 2-monophosphate salt of formula I is present.

2. A process according to claim 1, wherein the L-ascorbic acid 2-polyphosphate of formula II is produced in situ.

3. A process according to claim 1 or 2, wherein the L-ascorbic acid 2-polyphosphate used has the formula 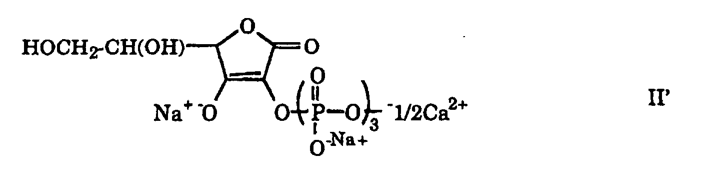 the alkali metal salt of L-ascorbic acid used has the formula 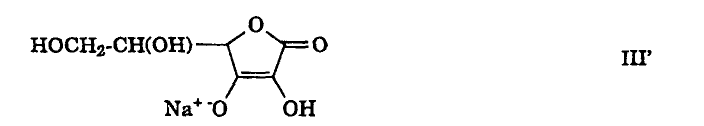 and calcium hydroxide is used as the base.

4. A process according to any one of claims 1 to 3, wherein the L-ascorbic acid 2-polyphosphate of formula II or II' is produced separately or produced in situ using sodium trimetaphosphate as the phosphorylating agent.

5. A process according to any one of claims 1 to 4, wherein the L-ascorbic acid 2-polyphosphate of formula II is produced in situ and for this purpose a mixture of sodium trimetaphosphate as the phosphorylating agent with the base, preferably calcium hydroxide, is added.

6. A process according to any one of claims 1 to 5, wherein the L-ascorbic acid 2-polyphosphate of formula II is produced in situ and about 0.5 to about 0.8 mol, preferably about 0.55 to 0.65 mol, of alkaline earth metal hydroxide is used per mol of L-ascorbic acid salt of formula III.

7. A process according to any one of claims 1 to 6, wherein the L-ascorbic acid 2-polyphosphate of formula II is produced in situ and about 0.3 to about 0.5 mol, preferably about 0.35 to about 0.45 mol, of sodium trimetaphosphate as the phosphorylating agent is used per mol of L-ascorbic acid salt of formula III.

8. A process according to any one of claims 1 to 7, wherein the reaction is effected at temperatures in the range of about 20°C to about 80°C, preferably in the range of about 40°C to about 60°C.

9. A process according to any one of claims 1 to 8, wherein the pH value is about 9 to about 10.

10. A process according to any one of claims 1 to 9, wherein, after completion of the reaction, cooling and dilution to a viscosity suitable for spray drying, the mixture obtained is spray dried.

## Revendications

1. Procédé pour la fabrication de sels de métaux alcalins ou de métaux alcalinoterreux à partir d'acide L-ascorbique-2-monophosphate de la formule générale : 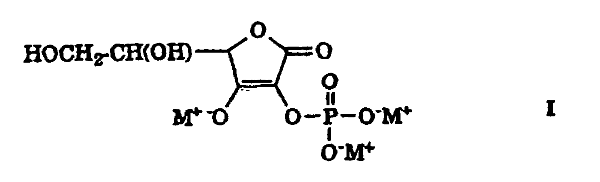 dans laquelle M⁺ représente respectivement l'ion d'un métal alcalin ou l'équivalent de l'ion d'un métal alcalinoterreux,
**caractérisé en ce qu'**un acide L-ascorbique-2-polyphosphate de la formule générale 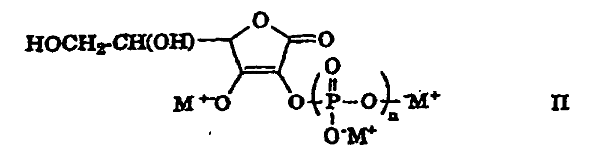 dans laquelle M⁺ représente la signification citée ci-dessus et n représente un chiffre entier à partir de 2,
est transformé dans des conditions alcalines avec un sel de métal alcalin ou un sel de métal alcalinoterreux de l'acide L-ascorbique de la formule générale : 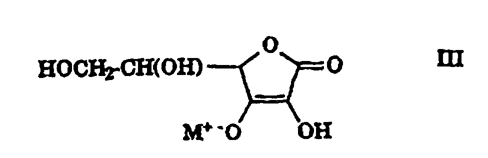 dans laquelle M⁺ représente la signification citée ci-dessus,
dans une solution aqueuse concentrée, où les quantités de sel d'acide ascorbique de la formule II et d'hydroxyde de métal alcalinoterreux utilisé comme base, sont déterminées de manière que la valeur pH du milieu de réaction soit maintenue dans une plage située entre environ 8 et environ 11 pour laisser place à un transfert progressif d'un groupe phosphaté respectivement 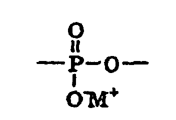 du polyphosphate de la formule II, sur le sel de l'acide L-ascorbique de la formule III, jusqu'à ce que le polyphosphate soit en majeure partie consommé et qu'il ne reste que la présence de sel d'acide L-ascorbique-2-monophosphate de la formule I.

2. Procédé selon la revendication 1, **caractérisé en ce que** l'acide L-ascorbique-2-polyphosphate de la formule II est fabriqué *in situ.*

3. Procédé selon la revendication 1 ou 2, **caractérisé en ce que** l'acide L-ascorbique-2-polyphosphate utilisé est un acide de la formule : 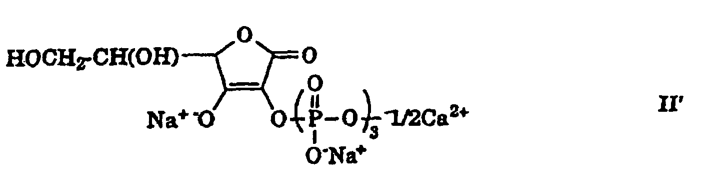 que le sel de métal alcalin de l'acidé L-ascorbique est un sel de la formule : 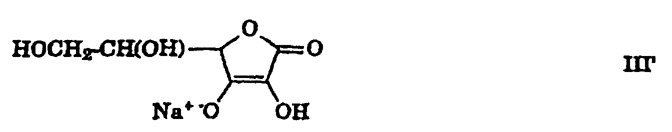 et que la base mise en oeuvre est de l'hydroxyde de calcium.

4. Procédé selon l'une des revendications 1 à 3, **caractérisé en ce que** l'acide L-ascorbique-2-polyphosphate de la formule II ou II' a été fabriqué à part, au moyen de sodiumtrimétaphosphate comme agent de phosphorylation ou qu'il a été fabriqué *in situ.*

5. Procédé selon l'une des revendications 1 à 4, **caractérisé en ce que** l'acide L-ascorbique-2-polyphosphate de la formule II est fabriqué *in situ* et qu'à cet effet, un mélange de sodiumtrimétaphosphate, de préférence de l'hydroxyde de calcium, est ajouté comme agent de phosphorylation avec la base.

6. Procédé selon l'une des revendications 1 à 5, **caractérisé en ce que** l'acide L-ascorbique-2-polyphosphate de la formule II est fabriqué *in situ* et qu'environ 0,5 à environ 0,8 mol, de préférence environ 0,55 à environ 0,65 mol d'hydroxyde de métal alcalinoterreux sont mis en oeuvre par mol de sel d'acide L-ascorbique de la formule III.

7. Procédé selon l'une des revendications 1 à 6, **caractérisé en ce que** l'acide L-ascorbique-2-polyphosphate de la formule II est fabriqué *in situ* et qu'environ 0,3 à environ 0,5 mol, de préférence environ 0,35 a environ 0,45 mol d'agent de phosphorylation sodiumtrimétaphosphate sont mis en oeuvre par mol de sel d'acide L-ascorbique de la formule III.

8. Procédé selon l'une des revendications 1 à 7, **caractérisé en ce que** la réaction a lieu à des températures situées dans une plage d'environ 20°C à environ 80°C, de préférence dans une plage située entre environ 40°C et environ 60°C.

9. Procédé selon l'une des revendications 1 à 8, **caractérisé en ce que** la valeur pH se situe entre environ 9 et environ 10.

10. Procédé selon l'une des revendications 1 à 9, **caractérisé en ce qu'**au terme de la réaction, après refroidissement et dilution jusqu'à obtention d'une viscosité adaptée au séchage par pulvérisation, le mélange obtenu est séché par pulvérisation.
